# EUROPEAN PATENT SPECIFICATION

(11) **EP 4 553 975 B1**
(45) Date of publication and mention of the grant of the patent: **12.08.2026**
(21) Application number: 24201531.1
(22) Date of filing: 20.09.2024
(51) Int. Cl.: H01M 50/204, H01M 50/22, H01M 50/227, H01M 50/293, H01M 50/249, H01M 50/209, H01M 50/242, H01M 50/289

(54) **BATTERY PACK BOX AND BATTERY PACK**
BATTERIEPACKBOX UND BATTERIEPACK
BOÎTIER DE BLOC-BATTERIE ET BLOC-BATTERIE

(30) Priority: 10.11.2023 CN 202311504398; 10.11.2023 CN 202323055362 U; 01.03.2024 WO PCT/CN2024/079618
(43) Date of publication of application: 14.05.2025
(73) Proprietor: Eve Energy Co., Ltd., Huizhou, Guangdong 516006 (CN)
(72) Inventor: CHEN, Shunan, Huizhou (CN); QIU, Wencong, Huizhou (CN)
(74) Representative: Murgitroyd & Company

(56) References cited:
- WO-A1-2018/029168
- CN-A- 114 747 074
- DE-A1- 102012 209 349
- US-A1- 2022 302 525
- US-B2- 11 518 227
- US-B2- 11 688 909

## Description

### TECHNICAL FIELD

The present application relates to the technical field of batteries, and more particularly, to a battery pack box and a battery pack.

### BACKGROUND

In the battery pack, the battery module is usually adhesively fixed to the battery pack box by the foaming glue. However, in the related art, due to poor bonding strength between the foaming glue and the frame of the battery pack box, the foaming glue is not sufficiently foamed at the positions of the inner cavity, the corners, and the like of the battery pack box, so that the overall rigidity and the overall strength of the battery pack are affected.

The battery packs are known from, for example, US11688909B2, US2022/302525A1, DE102012209349A1, US11518227B2, and CN114747074A.

### SUMMARY

### Technical problem

How to improve the overall rigidity and the overall strength of the battery pack.

### Technical solution

An object of the present application is to provide a battery pack box and a battery pack. The invention is set out in the appended set of claims.

### Beneficial effect

An advantageous effect of the present application is as follows. In the embodiments of the present application, the gap between the foaming glue and the side beam can be reduced by providing the structural reinforcement in the inside of the box frame, so that the foaming is more concentrated. Meanwhile, an accommodating chamber is provided in the structural reinforcement, and the accommodating chamber communicates with the space of the inside of the box frame, so that the foaming glue can enter the accommodating chamber, thereby increasing the bonding area between the foaming glue and the box frame, and improving the overall rigidity and the overall strength of the battery pack. The bottom guard plate is designed with a multi-layer composite structure, and is cooperated with a plurality of elastic supports provided on the bottom guard plate, so that the scratch resistance of the bottom of the battery pack is enhanced, the protection of the inner structure and components of the battery pack box is improved, and the service life of the battery pack is prolonged. In addition, pressure relief cavities are provided in the box frame, and are cooperated with a plurality of pressure relief holes provided at the bottom of the box frame, so that battery cells located at different positions inside the battery pack box can be subjected to the sufficient pressure relief, thereby improving the safety performance of the battery pack box.

### BRIEF DESCRIPTION OF THE DRAWINGS

FIG. 1 is an isometric view of a battery pack box (with a box cover removed) in accordance with an embodiment of the present application;
FIG. 2 is an isometric view of a first side beam in accordance with an embodiment of the present application;
FIG. 3 is a schematic sectional view of a first side beam in accordance with an embodiment of the present application;
FIG. 4 is an isometric view of an inner beam in accordance with an embodiment of the present application;
FIG. 5 is a schematic sectional view of an inner beam in accordance with an embodiment of the present application; and
FIG. 6 is a schematic diagram of a structure of a bottom guard plate in accordance with an embodiment of the present application.

Reference signs: 100, box frame; 110, first side beam; 111, top recess; 112, reinforcing plate; 120, second side beam; 130, third side beam; 140, fourth side beam; 200, bottom guard plate; 210, bottom plate; 220, buffer layer; 230, metal plate; 240, insulation plate; 300, pressure relief cavity; 310, pressure relief hole; 320, pressure relief gap; 40, structural reinforcement; 41, accommodating chamber; 400, inner side beam; 410, first connecting portion; 420, first bent portion; 421, first transition connecting section; 422, second transition connecting section; 423, glue accommodating trough; 500, first accommodating chamber; 510, first opening; 600, exhaust hole; 700, inner beam; 710, main connecting portion; 720, second connecting portion; 730, third connecting portion; 740, second bent portion; 800, second accommodating chamber; 810, second opening; and 900, elastic support.

### DETAILED DESCRIPTION

### Example 1

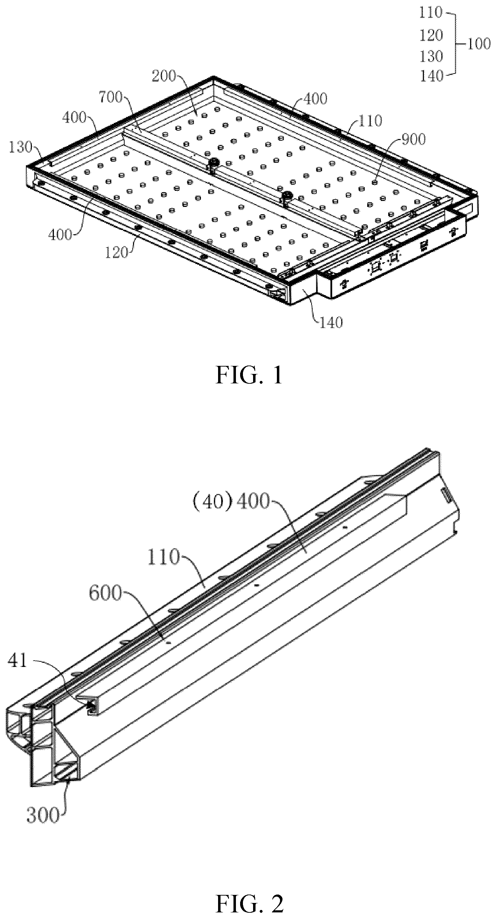

Referring to FIG. 1, in view of the above technical problems, according to an embodiment of the present invention, it is provided a battery pack box including a box frame 100, a bottom guard plate 200, and a box cover (not shown). The bottom guard plate 200 is fixedly connected to a bottom of the box frame 100, and the box cover can be fixed to a top of the box frame 100. In practical application, the battery module can be mounted on the bottom guard plate 200, and the battery module and the battery pack box can be adhesively fixed by foaming glue. The box cover can close a top opening of the battery pack box. So, a battery pack with a stable structure can be formed.

In the present embodiment, the box frame 100 may be formed to be of a quadrilateral square frame structure, which includes four side beams connected to each other. The four side beams are connected end to end in sequence, and may be fixedly connected by welding or bolting.

For convenience of description, it is possible to define the first side beam 110 and the second side beam 120 as the two opposite side beams of the four side beams. Correspondingly, the other two of the four side beams are the third side beam 130 and the fourth side beam 140, respectively. The first side beam 110 and the second side beam 120 are parallel to each other and equal in length, and the third side beam 130 and the fourth side beam 140 are parallel to each other and equal in length. The lengths of the first side beam 110 and the second side beam 120 may be larger than those of the third side beam 130 and the fourth side beam 140.

Referring to FIG. 2-3, in the present embodiment, in order for the pressure relief of the battery cells, the first side beam 110 may be made of a hollow profile, and both ends of the first side beam 110 are each of an open structure. The inside of the first side beam 110 forms a pressure relief cavity 300 for pressure relief. At the same time, a plurality of pressure relief holes 310 may be formed on a side of the first side beam 110 which is adjacent to the bottom guard plate 200, and the plurality of pressure relief holes 310 may be arranged at uniform intervals along the length direction of the first side beam 110. The specific number of the pressure relief holes 310 can be flexibly optimized as required, for example, two, three, or more of the pressure relief holes 310 can be provided, which is not specifically limited.

At the same time, a top surface of the first side beam 110 (i.e., the surface thereof which faces away from the bottom guard plate 200) may also be provided with a top recess 111, which may extend along the length direction of the first side beam 110 and may be provided at a middle portion of the top surface of the first side beam 110. A width of an upper opening of the top recess 111 is preferably larger than a width of a bottom thereof, and the top recess 111 may be used to fill the sealant. A structure, in which the opening is larger and the bottom is smaller, of the top recess 111 may be provided to assist in guiding the sealant inflow to ensure the sealability between the box frame and the box cover. Further, a side of the first side beam 110 which is adjacent to the inside of the box frame may be provided with a reinforcing plate 112 that is obliquely fixed, and the reinforcing plate 112 can effectively improve the structural strength of the first side beam 110.

It should be noted that, in order to ensure a smooth pressure relief during the battery cell is exploded, a height difference is provided between a position of the first side beam 110 which corresponds to the pressure relief cavity 300 and the bottom guard plate 200 below, that is, a pressure relief gap 320 is reserved between a portion of a lower surface of the first side beam 110 which corresponds to the pressure relief cavity 300 and the bottom guard plate 200. So, it may ensure that the gas enters into the pressure relief holes 310 through the pressure relief gap 320, and finally the pressure relief is completed.

Similarly, the second side beam 120 may be designed with the above structure, that is, the second side beam 120 may be also provided with the pressure relief cavity 300 and the plurality of pressure relief holes 310 with reference to the first side beam 110. The specific configuration of the second side beam 120 may be described with reference to the related description of the first side beam 110, and details are not described herein.

Based on the above-described structural design of the first side beam 110 and the second side beam 120, by providing the pressure relief holes 310 in the first side beam 110 and the second side beam 120, the pressure relief holes 310 can communicate with the pressure relief cavity 300 and the space of the inside of the box frame 100. When the battery cells inside the battery pack are subjected to thermal runaway, gas can enter the pressure relief cavity 300 through the pressure relief holes 310 and be discharged through the pressure relief cavity 300, thereby achieving the pressure relief.

Furthermore, since the pressure relief cavities 300 and the plurality of pressure relief holes 310 in both the first side beam 110 and the second side beam 120 are symmetrically arranged, it is ensured that the distance between each of the battery cells at different positions and an adjacent one of the pressure relief holes 310 is relatively balanced, and that the battery cells at different positions can be subjected to sufficient pressure relief.

Referring to FIGS. 1 and 2, in the present embodiment, to improve the rigidity of the battery pack box, the structural reinforcement 40 is provided in the inside of the box frame 100, and the structural reinforcement 40 is fixedly connected to the inner side of the box frame 100. By providing the structural reinforcement 40 on the inner side of the box frame 100, the structural reinforcement 40 may reduce the space of the inside the battery pack box and increase the rigidity of the battery pack box.

Specifically, the structural reinforcement 40 includes three inner side beams 400, which may be each fixedly disposed on a corresponding one of the side beams. For example, three inner side beams 400 may be provided on the first side beam 110, the second side beam 120, and the third side beam 130, respectively. By providing the inner side beams 400 on the first side beam 110, the second side beam 120, and the third side beam 130 respectively, it is possible to reduce the space of the inside the battery pack box and increase the bonding area between the box frame 100 and the foaming glue.

In the present embodiment, the three inner side beams 400 may be of the same structures and the same arrangements except that the three inner side beams 400 are provided on the first side beam 110, the second side beam 120, and the third side beam 130, respectively. Therefore, for ease of description, the structure and the arrangement of the inner side beam 400 will be described below with reference to the inner side beam 400 that corresponds to the first side beam 110.

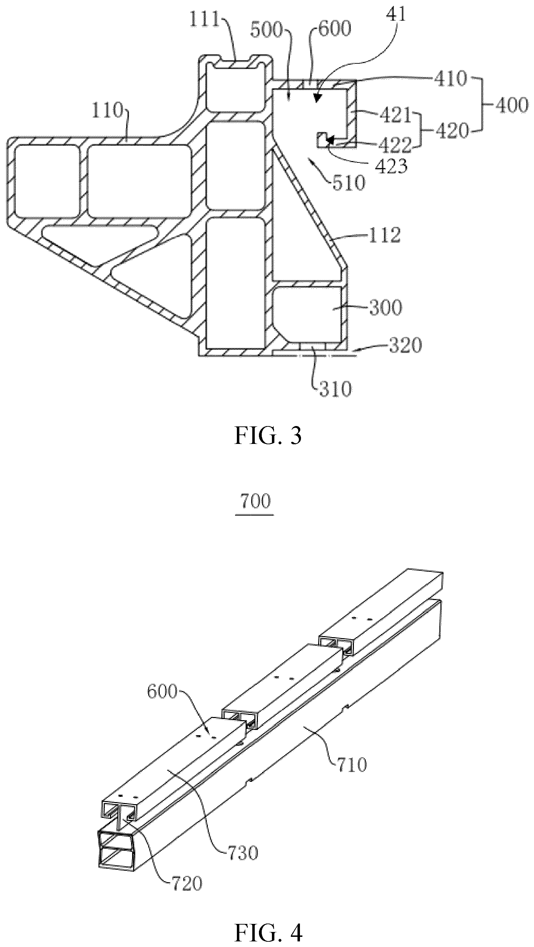

Specifically, for example, the inner side beam 400 corresponding to the first side beam 110 is provided on an inner side wall of the first side beam 110, and is fixedly connected to the first side beam 110. The inner side beam 400 and the first side beam 110 may be fixed by welding, or may be fixed by detachable connection such as bolting or riveting, which is not specifically limited. Referring to FIGS. 2 and 3, in this embodiment, the inner side beam 400 may be disposed parallel to the first side beam 110, that is, the inner side beam 400 may extend along the length direction of the first side beam 110 and be fixedly connected to the inner side wall of the first side beam 110.

Specifically, the inner beam 400 includes a first connecting portion 410 and a first bent portion 420. The first connecting portion 410 may be perpendicularly fixed to the inner side wall of the first side beam 110, and the first bent portion 420 is provided on a side of the first connecting portion 410 which is away from the first side beam 110. The first bent portion 420 and the first connecting portion 410 may be integrally formed, or may be interconnected by two separate members. However, in view of structural stability, the first bent portion 420 and the first connecting portion 410 are preferably integrally formed.

The first bent portion 420 includes a first transition connecting section 421 and a second transition connecting section 422. The first connecting portion 410 is connected to the first transition connecting section 421 at an included angle, and the first transition connecting section 421 is connected to the second transition connecting section 422 at an included angle. The second transition connecting section 422 is provided with a glue accommodating trough 423. The first transition connecting section 421 is connected to a side of the first connecting portion 410 which is away from the first side beam 110, and is bent towards a side where the bottom guard plate 200 is located. The second transition connecting section 422 is bent and formed on a side of the first transition connecting section 421 which is away from the first connecting portion 410, and bent towards a side where the first side beam 110 is located.

At this time, a first accommodating chamber 500 is formed between the first bent portion 420 and the inner side wall of the first side beam 110, and a first opening 510 is further formed between the second transition connecting section 422 and the inner side wall of the first side beam 110. The first opening 510 communicates with the first accommodating chamber 500, which can be used to provide foaming glue to enter the first accommodating chamber 500. So, the foaming glue can be foamed in the first accommodating chamber 500 to be adhesively fixed to the first side beam 110. By arranging the inner side beam 400 in the form of a combination of the first connecting portion 410 and the first bent portion 420, the foaming glue can enter the first accommodating chamber 500 and complete foaming. So, not only the bonding area between the box frame 100 and the foaming glue can be increased, but also a constraint can be formed between the inner side beam 400 and the foaming glue in a direction perpendicular to the bottom guard plate 200 and in a direction perpendicular to the inner side wall of the first side beam 110 after the foaming is completed. In this way, the connection strength between the battery pack and the foaming glue is further increased, and the overall rigidity of the battery pack is improved.

It should be noted that in the present embodiment, the inner side beam 400 may be provided on the same side of the first side beam 110 together with the reinforcing plate 112 described above, and the inner side beam 400 may be provided just above the reinforcing plate 112. So, the gap between the inner side beam 400 and the reinforcing plate 112 below forms the first opening 510 described above. In this way, the reinforcing plate 112 can not only improve the structural strength of the first side beam 110, but also guide the flow of the foaming glue to enable the foaming glue to smoothly enter the first accommodating chamber 500 through the first opening 510 and complete foaming.

In this embodiment, to ensure that the foaming glue can be foamed sufficiently in the first accommodating chamber 500, the inner side beam 400 is further provided with a plurality of exhaust holes 600. Specifically, the plurality of exhaust holes 600 may be arranged at uniform intervals along the length direction of the inner side beam 400. The exhaust holes 600 and the first opening 510 may be provided on opposite two sides of the inner side beam 400, respectively. For example, the first opening 510 may be provided on a lower side of the inner side beam 400 (i.e., a side that is adjacent to the bottom guard plate 200), and the exhaust holes 600 may be provided on an upper side of the inner side beam 400 (i.e., a side of the inner side beam 400 which faces away from the bottom guard plate 200).

By providing the plurality of exhaust holes 600 in the inner side beam 400, after the foaming glue enters the first accommodating chamber 500 through the first opening 510, the gas in the first accommodating chamber 500 can be discharged from the exhaust holes 600 as the foaming glue continuously foams. In this process, the foaming glue gradually fills the first accommodating chamber 500 from bottom to top, thereby ensuring that the foaming glue can sufficiently fill the first accommodating chamber 500 to increase the bonding area between the foaming glue and the inner side beam 400. Also, a foaming height of the foaming glue should be lower than a highest height of the inner side beam 400, so that the foaming glue is prevented from blocking the exhaust holes 600 to ensure that the gas can be stably discharged from the exhaust holes 600.

In the present embodiment, the inner side beam 400 may take the form of a single member, or may take the form of a combination of a plurality of members.

When the inner side beam 400 is in the form of a single member, the inner side beam 400 is fixedly connected to the first side beam 110, and both ends of the inner side beam 400 can extend toward the third side beam 130 and the fourth side beam 140 at two sides. So, it is ensured that there is a gap between the end of the inner side beam 400 and the adjacent side beam, so that the foaming glue at the corner position can enter the first accommodating chamber 500.

When the inner side beam 400 is in the form of a combination of a plurality of members, the inner side beam 400 may be divided into a plurality of sections along the length direction of the first side beam 110. Similarly, both ends of the inner side beam 400 extend toward the third side beam 130 and the fourth side beam 140 at two sides, respectively, in a manner similar to the case where the inner side beam 400 is in the form of the single member, except that a notch will be formed between the sections of the inner side beam 400. And, the notch will allow the foaming glue to enter the first accommodating chamber 500 and achieve foaming and bonding.

In the present embodiment, the other two inner side beams 400 are provided on the second side beam 120 and the third side beam 130, respectively, and the specific structure and the arrangement thereof may be provided with reference to the inner side beam 400 on the first side beam 110, details of which are not described.

It should be noted that in the present embodiment, three inner side beams 400 are provided, and the three inner side beams 400 are fixed to the first side beam 110, the second side beam 120, and the third side beam 130, respectively. However, the number of the inner side beams 400 can be flexibly optimized as required. For example, the number of the inner side beams 400 can be four, which are fixed to the four side beams respectively. Alternatively, only one inner side beam 400 may be provided, and the inner side beam 400 may be fixed to one of the inner side beams. Alternatively, two inner side beams 400 may be provided, and the two inner side beams 400 are fixed to the first side beam 110 and the second side beam 120, respectively. Therefore, the number of the inner side beams 400 may be set to one, two, three, or four, which is not specifically limited.

Referring to FIG. 1, in the present embodiment, the above-described structural reinforcement 40 further includes an inner beam 700 disposed on the inner side of the box frame 100, and both ends of the inner beam 700 may be connected to two side beams disposed opposite to each other.

By further providing the inner beam 700 on the inner side of the box frame 100, it is possible to further reduce the space of the inside the box and increase the bonding area between the box frame 100 and the foaming glue, thereby improving the rigidity of the battery pack box.

In the present embodiment, the inner beam 700 is provided on the inner side of the box frame 100, upper and lower sides of the inner beam 700 can be fixedly connected to the box cover and the bottom guard plate 200, respectively, and both ends of the inner beam 700 can be connected to the third side beam 130 and the fourth side beam 140, respectively, so that the inner beam 700 is stably mounted on the inner side of the box frame 100.

By further providing the inner beam 700 on the inner side of the box frame 100, the inner beam 700 divides the inner space of the box frame 100 into two parts, which further reduces the space of the inside of the battery pack box, and increases the adhesive area between the box frame 100 and the foaming glue.

Referring to FIGS. 4 to 5, in the present embodiment, the inner beam 700 includes a main connecting portion 710, a lower side of which is fixedly connected to the bottom guard plate 200, and both ends of which are respectively connected to the third side beam 130 and the fourth side beam 140. An upper side of the main connecting portion 710 (that is, a side of the main connecting portion 710 which faces away from the bottom guard plate 200) is provided with a second connecting portion 720, which is perpendicularly fixed to the main connecting portion 710 and both ends of which extends toward the third side beam 130 and the fourth side beam 140, respectively. A third connecting portion 730 is further provided on the second connecting portion 720, and perpendicularly fixed to a side of the second connecting portion 720 which is away from the main connecting portion 710. Two ends of the third connecting portion 730 likewise extend toward the third side beam 130 and the fourth side beam 140, respectively. Each of the opposite two sides of the third connecting portion 730 is provided with a second bent portion 740, and the two second bent portions 740 may be provided on the opposite two sides of the third connecting portion 730 in an integral bending molding manner. The two ends of the second bent portion 740 likewise extend toward the third side beam 130 and the fourth side beam 140, respectively.

The second bent portion 740 may have the same structure as the first bent portion 420, that is, the second bent portion 740 may have the same structure as the first bent portion 420, and also includes a similar first transition connecting section 421 and a similar second transition connecting section 422. Specifically, the second bent portion 740 may be provided on the third connecting portion 730 with reference to the first bent portion 420, and details are not described herein.

By providing the third connecting portion 730 on the second connecting portion 720 and providing the second bent portions 740 on opposite two sides of the third connecting portion 730, a second accommodating chamber 800 is formed between each of the second bent portions 740 and the second connecting portion 720, and the second opening 810 is further formed between the second transition connecting section 422 of the second bent portion 740 and the second connecting portion 720. The second opening 810 communicates with the second accommodating chamber 800. The foaming glue may enter the second accommodating chamber 800 from the second opening 810, and foaming is completed in the second accommodating chamber 800, so that the bonding fixation with the inner beam 700 is realized.

Meanwhile, by arranging the inner beam 700 in the above-described configuration, the foaming glue can be foamed in the second accommodating chamber 800. As described above, not only the bonding area between the battery pack box and the foaming glue can be further increased, but also a constraint can be formed between the restrained the inner beam 700 and the foaming glue in a direction perpendicular to the bottom guard plate 200 and in a direction perpendicular to the second connecting portion 720 after the foaming is completed. In this way, the connection strength between the battery pack box and the foaming glue is further enhanced, so as to improve the overall rigidity of the battery pack box.

In this embodiment, to ensure that the foaming glue can be foamed sufficiently in the second accommodating chamber 800, the inner beam 700 may be provided with a plurality of exhaust holes 600. Specifically, a plurality of exhaust holes 600 may be formed in the third connecting portion 730. At this time, a plurality of exhaust holes 600 are provided on the inner beam 700 in a manner of corresponding to the second opening 810 up and down.

Thus, after the foaming glue enters the second accommodating chamber 800 through the second opening 810, the gas in the second accommodating chamber 800 can be discharged from the exhaust holes 600 as the foaming glue is continuously foamed. In this process, the foaming glue gradually fills the second accommodating chamber 800 from bottom to top, thereby ensuring that the foaming glue can sufficiently fill the second accommodating chamber 800 to increase the bonding area between the foaming glue and the inner beam 700. Similarly, a foaming height of the foaming glue should also be lower than a maximum height of the inner beam 700, so that the foaming glue is prevented from blocking the exhaust holes 600 in the inner beam 700 to ensure that the gas can be stably discharged from the exhaust holes 600.

It should be noted that, in the present embodiment, only one inner beam 700 is provided, but two or more inner beams 700 may actually be provided as required. For example, when two inner beams 700 are provided, the two inner beams 700 may be provided at parallel intervals on the inner side of the box frame 100. Therefore, the specific number of the inner beams 700 is not specifically limited herein, and a flexible optimization design can be performed as required.

Meanwhile, based on the above description of the structural reinforcement 40, the structural reinforcement 40 in this embodiment includes a plurality of inner side beams 400 and the inner beam 700. All the inner beams 400 and the inner beam 700 are each provided with an accommodating chamber (i.e., the first accommodating chamber 500 and the second accommodating chamber 800), an opening (the first opening 510 and the second opening 810) in communication with the accommodating chamber 41, and exhaust holes 600. The foaming glue may enter the accommodating chamber 41 via the openings and gradually fill the corresponding accommodating chamber 41. So, gas is discharged from the exhaust holes 600, and finally foaming is completed in the accommodating chamber 41. Since both the first bent portion 420 and the second bent portion 740 have the above-described structure, there are multi-directional constraints between the foam glue and the inner side beam 400, as well as between the foam glue and the inner beam 700, thereby improving the connection strength between the battery pack box and the foam glue to ensure the overall rigidity of the battery pack box.

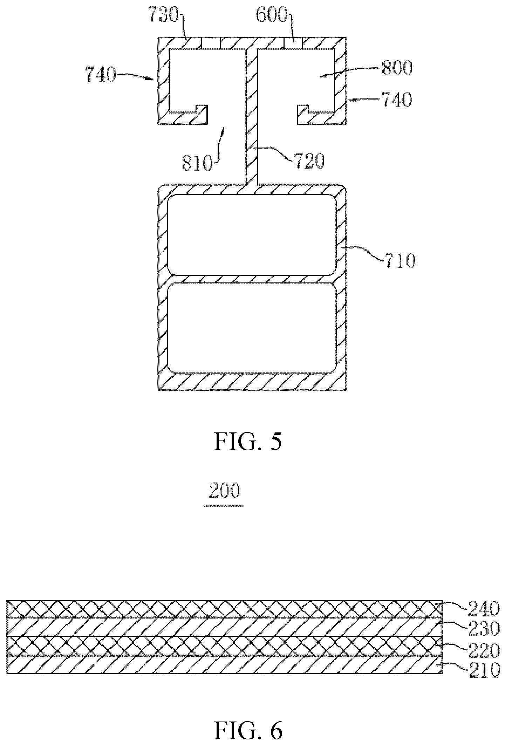

Referring to FIGS. 1 and 6, in this embodiment, the bottom guard plate 200 may take the form of a multi-layer composite structure. Specifically, the bottom guard plate 200 includes a bottom plate 210, a buffer layer 220 provided on the bottom plate 210, a metal plate 230 provided on a side of the buffer layer 220 which faces away from the bottom plate 210, and an insulation plate 240 provided on a side of the metal plate 230 which faces away from the buffer layer 220. In actual installation, the bottom guard plate 200 abuts against the box frame 100 through the insulation plate 240.

By arranging the bottom protective plate 200 in a four-layer composite structure, not only the rigidity and the strength of the bottom protective plate 200 can be ensured by the buffer layer 220, the metal layer and the insulation plate 240, but also the insulation, the buffer and the scratch resistance can be realized. The inner structure of the battery pack box can be further protected from being damaged. At the same time, in particular cases, for example, when a layer of sheet or layers of sheets in the bottom guard plate 200 are damaged, it is possible to replace a damaged sheet more targetedly, thereby achieving a cost-saving purpose.

In the present embodiment, a plurality of elastic supports 900 may be provided on the bottom guard plate 200, and the plurality of elastic supports 900 may be arrayed on the bottom guard plate 200, or the distribution pattern of the elastic supports 900 on the bottom guard plate 200 may be flexibly adjusted according to the distribution pattern of the battery cells. Specifically, the elastic supports 900 may be provided on the insulation plate 240 of the bottom guard plate 200. The elastic support 900 may be made of circular foam or other material having an elastic support function, which is not specifically limited thereto.

By providing a plurality of elastic supports 900 on the bottom guard plate 200, the elastic supports 900 can not only improve the support ability of the bottom guard plate 200 to the battery module, but also have a function of absorbing energy and damping, thereby further improving the safety of the battery pack.

Further, in practical application, the battery cells are disposed the inside of the battery pack box through the battery cell tray. By providing the plurality of elastic supports 900, the plurality of elastic supports 900 can support a bottom of a battery cell tray and form a gap between the battery cell tray and the bottom guard plate 200 below. The gap can communicate with the pressure relief cavity 300 and the pressure relief gap 320 below. So, it may ensure that the gas can flow into the pressure relief holes 310 through the pressure relief gap 320 when the battery cells are out of control, and the pressure relief is finally completed.

It should be noted that in order to achieve stable pressure relief, in addition to supporting the battery cell tray by a plurality of elastic supports 900 to form a gap for supplying gas flow, when the foaming glue is actually provided, due to the upward foaming and the limited fluidity characteristics of the foaming glue, the foaming area of the foaming glue can be reasonably controlled, and the pressure relief gap 320 is shielded in advance during the assembly, so as to prevent the foaming glue from blocking the pressure relief gap 320. So, it may ensure stable pressure relief when the battery cells are out of control.

In addition, in the present embodiment, the bottom guard plate 200 is in the form of a four-layer composite structure, and the bottom guard plate 200 is also in the form of a combination of two, three, five or more layers. For example, when the performance requirements of the bottom guard plate 200 are mainly buffer performance, the bottom guard plate 200 may consist of only the bottom plate 210 and the buffer layer 220. When the performance requirements of the bottom guard plate 200 are primarily buffered and insulated, the bottom guard plate 200 may consist of only the bottom plate 210, the buffer layer 220, and the insulation plate 240. When more performance requirements exist for the bottom panel 200, more sheets can be added to the present embodiment as required. Further forms of the structure of the bottom guard plate 200 will not be exhaustive.

### Example 2

According to an embodiment of the present invention, it is further provided a battery pack including the battery pack box described above, in which a battery module (not shown) is provided in the battery pack box, and the battery module can be adhesively fixed to the bottom guard plate 200 by foaming glue.

By installing the battery module in the above-described battery pack box, the above-described structure of the battery pack box can be used to improve not only the rigidity and the strength of the entire battery pack, but also the scratch resistance of the battery pack, thereby reducing the risk of deformation and cracking of the battery pack, and prolonging the service life of the battery pack.

## Claims

1. A battery pack box comprising a box frame (100), wherein the box frame (100) comprises a plurality of side beams connected to each other; an inside of each of the side beams is provided with a structural reinforcement (40) connected to the inside of the side beam, the structural reinforcement (40) is provided with an accommodating chamber (41) communicating with space of an inside of the box frame (100) which is enclosed by the side beams, **characterized in that** the accommodating chamber (41) is extended in an extending direction of the structural reinforcement (40), the structural reinforcement (40) is divided into a plurality of sections in the extending direction of the structural reinforcement (40), a notch is formed between every adjacent two of the plurality of sections, the accommodating chamber (41) is configured to fill with at least a part of foaming glue, and the at least part of foaming glue is constrained by the accommodating chamber (41).

2. The battery pack box according to claim 1, wherein the structural reinforcement (40) comprises a plurality of inner side beams (400), and each of the plurality of inner side beams (400) is fixedly disposed on a corresponding one of the plurality of side beams.

3. The battery pack box according to claim 2, wherein each of the inner side beam (400) is divided into a plurality of sections along a length direction of the corresponding one of the plurality of side beams, and adjacent two of the plurality of sections is formed with a notch.

4. The battery pack box according to claim 2, wherein the accommodating chamber (41) comprises first accommodating chambers (500) each provided in a corresponding one of the inner side beams (400), the first accommodating chamber (500) extends along the inner side beam (400) and communicates with the space of the inside of the box frame (100).

5. The battery pack box according to claim 4, wherein the inner side beam (400) comprises:
a first connecting portion (410) configured to connect a corresponding one of the side beams; and
a first bent portion (420) connected to a side of the first connecting portion (410) which is away from the corresponding side beam;
wherein the first bent portion (420) and the corresponding side beam together define the first accommodating chamber (500), a first opening (510) is formed between the first bent portion (420) and the corresponding side beam, the first opening (510) communicates with the first accommodating chamber (500), and the first opening (510) is configured to allow the foaming glue to enter the first accommodating chamber (500).

6. The battery pack box according to claim 5, wherein the first bent portion (420) comprises a first transition connecting section (421) and a second transition connecting section (422), the first connecting portion (410) is connected with the first transition connecting section (421) at an included angle, the first transition connecting section (421) is connected with the second transition connecting section (422) at an included angle, and the second transition connecting section (422) is provided with a glue accommodating trough (423).

7. The battery pack box according to claim 6, wherein the second transition section (422) is bent and formed on a side of the first transition connecting section (421) which is away from the first connecting portion (410), and bent towards a side where a first side beam (110) connecting with the first connecting portion (410) is located.

8. The battery pack box according to claim 1, wherein the structural reinforcement (40) further comprises an inner beam (700) provided the inside of the box frame (100), wherein two ends of the inner beam (700) are each connected to a corresponding one of side beams.

9. The battery pack box according to claim 8, wherein the accommodating chamber (41) further comprises a second accommodating chamber (800) provided in the inner beam (700), and the second accommodating chamber (800) extends along the inner beam (700) and communicates with the space of the inside of the box frame (100).

10. The battery pack box according to claim 9, wherein the inner beam (700) comprises:
a main connecting portion (710) two ends of which are each connected to a corresponding one of the side beams;
a second connecting portion (720) fixedly provided on the main connecting portion (710) and extending along the main connecting portion (710);
a third connecting portion (730) perpendicularly fixed to a side of the second connecting portion (720) which is away from the main connecting portion (710), and extends along the main connecting portion (710); and
two second bent portions (740) provided on opposite two sides of the third connecting portion (730) respectively;
wherein the second connecting portion (720) and each of the two second bent portions (740) define the second accommodating chamber (800); a second opening (810) is formed between the second bent portion (740) and the second connecting portion (720), the second opening (810) communicates with the second accommodating chamber (800), and the second opening (810) is configured for foaming glue to enter the second accommodating chamber (800).

11. The battery pack box according to claim 10, wherein the inner beam (700) is provided with a plurality of exhaust holes (600), and the plurality of exhaust holes are provided on the inner beam in a manner of corresponding to the second opening (810) up and down.

12. The battery pack box according to any one of claims 5 to 7, wherein the structural reinforcement (40) is provided with a plurality of exhaust holes (600), the plurality of exhaust holes (600) communicate with the accommodating chamber (41), and the plurality of exhaust holes (600) and a foaming glue inlet in the structural reinforcement (40) are provided on opposite two sides of the structural reinforcement (40), respectively.

13. The battery pack box according to claim 12, wherein the plurality of exhaust holes (600) and the first opening (510) are disposed opposite two sides of the inner side beam (400), respectively.

14. The battery pack box according to any one of claims 5 to 13, wherein the inside of the box frame (100) is further provided with reinforcing plates (112) each obliquely fixed to a side of a corresponding one of the side beams which is adjacent to the inside of the box frame (100), and the first opening (510) is formed between the reinforcing plate (112) and a corresponding one of the inner side beams (400).

15. A battery pack comprising the battery pack box according to any one of claims 1 to 14.

## Patentansprüche

1. Batteriepackgehäuse, umfassend einen Gehäuserahmen (100), wobei der Gehäuserahmen (100) eine Vielzahl von miteinander verbundenen Seitenträgern umfasst; wobei eine Innenseite jedes der Seitenträger mit einer strukturellen Verstärkung (40) versehen ist, die mit der Innenseite des Seitenträgers verbunden ist, wobei die strukturelle Verstärkung (40) mit einer Aufnahmekammer (41), die mit dem Raum im Inneren des Gehäuserahmens (100) in Verbindung steht, der von den Seitenträgern umschlossen ist, **dadurch gekennzeichnet, dass** sich die Aufnahmekammer (41) in einer Ausdehnungsrichtung der strukturellen Verstärkung (40) erstreckt, die strukturelle Verstärkung (40) in eine Vielzahl von Abschnitten in der Ausdehnungsrichtung der strukturellen Verstärkung (40) unterteilt ist, zwischen jeweils zwei benachbarten der mehreren Abschnitte eine Aussparung ausgebildet ist, die Aufnahmekammer (41) so ausgebildet ist, dass sie mit zumindest einem Teil von Schaumkleber gefüllt werden kann, und der zumindest ein Teil des Schaumklebers durch die Aufnahmekammer (41) begrenzt wird.

2. Batteriepackgehäuse nach Anspruch 1, wobei die strukturelle Verstärkung (40) eine Vielzahl von inneren Seitenträgern (400) umfasst und jeder der Vielzahl von inneren Seitenträgern (400) fest an einem entsprechenden der Vielzahl von Seitenträgern angeordnet ist.

3. Batteriepackgehäuse nach Anspruch 2, wobei jeder der inneren Seitenträger (400) entlang einer Längsrichtung des entsprechenden der mehreren Seitenträger in mehrere Abschnitte unterteilt ist und zwei benachbarte der mehreren Abschnitte mit einer Aussparung versehen sind.

4. Batteriepackgehäuse nach Anspruch 2, wobei die Aufnahmekammer (41) erste Aufnahmekammern (500) umfasst, die jeweils in einem entsprechenden der inneren Seitenträger (400) vorgesehen sind, wobei sich die erste Aufnahmekammer (500) entlang des inneren Seitenträgers (400) erstreckt und mit dem Innenraum des Gehäuserahmens (100) in Verbindung steht.

5. Batteriepackgehäuse gemäß Anspruch 4, wobei der innere Seitenträger (400) umfasst:
einen ersten Verbindungsabschnitt (410), der so konfiguriert ist, dass er einen entsprechenden der Seitenträger verbindet; und
einen ersten gebogenen Abschnitt (420), der mit einer Seite des ersten Verbindungsabschnitts (410) verbunden ist, die von dem entsprechenden Seitenträger abgewandt ist;
wobei der erste gebogene Abschnitt (420) und der entsprechende Seitenträger gemeinsam die erste Aufnahmekammer (500) bilden, eine erste Öffnung (510) zwischen dem ersten gebogenen Abschnitt (420) und dem entsprechenden Seitenträger ausgebildet ist, die erste Öffnung (510) mit der ersten Aufnahmekammer (500) in Verbindung steht und die erste Öffnung (510) so ausgebildet ist, dass der Schaumkleber in die erste Aufnahmekammer (500) eintreten kann.

6. Batteriepackgehäuse gemäß Anspruch 5, wobei der erste gebogene Abschnitt (420) einen ersten Übergangsverbindungsabschnitt (421) und einen zweiten Übergangsverbindungsabschnitt (422) umfasst, der erste Verbindungsabschnitt (410) mit dem ersten Übergangsverbindungsabschnitt (421) unter einem Winkel verbunden ist, der erste Übergangsverbindungsabschnitt (421) mit dem zweiten Übergangsverbindungsabschnitt (422) unter einem Winkel verbunden ist und der zweite Übergangsverbindungsabschnitt (422) mit einer Klebstoffaufnahmemulde (423) versehen ist.

7. Batteriepackgehäuse nach Anspruch 6, wobei der zweite Übergangsverbindungsabschnitt (422) an einer Seite des ersten Übergangsverbindungsabschnitts (421), die vom ersten Verbindungsabschnitt (410) entfernt ist, gebogen und ausgebildet ist und zu einer Seite hin gebogen ist, an der sich ein erster Seitenträger (110) befindet, der mit dem ersten Verbindungsabschnitt (410) verbunden ist.

8. Batteriepackgehäuse nach Anspruch 1, wobei die strukturelle Verstärkung (40) ferner einen Innenbalken (700) umfasst, der an der Innenseite des Gehäuserahmens (100) vorgesehen ist, wobei die beiden Enden des Innenbalkens (700) jeweils mit einem entsprechenden der Seitenträger verbunden sind.

9. Batteriepackgehäuse nach Anspruch 8, wobei die Aufnahmekammer (41) ferner eine zweite Aufnahmekammer (800) umfasst, die in dem Innenbalken (700) vorgesehen ist, und sich die zweite Aufnahmekammer (800) entlang des Innenbalkens (700) erstreckt und mit dem Innenraum des Gehäuserahmens (100) in Verbindung steht.

10. Batteriepackgehäuse nach Anspruch 9, wobei der Innenbalken (700) umfasst:
einen Hauptverbindungsabschnitt (710), dessen beide Enden jeweils mit einem entsprechenden der Seitenträger verbunden sind;
einen zweiten Verbindungsabschnitt (720), der fest an dem Hauptverbindungsabschnitt (710) vorgesehen ist und sich entlang des Hauptverbindungsabschnitts (710) erstreckt;
einen dritten Verbindungsabschnitt (730), der senkrecht an einer Seite des zweiten Verbindungsabschnitts (720) befestigt ist, die vom Hauptverbindungsabschnitt (710) abgewandt ist, und sich entlang des Hauptverbindungsabschnitts (710) erstreckt; und
zwei zweite gebogene Abschnitte (740), die jeweils an zwei gegenüberliegenden Seiten des dritten Verbindungsabschnitts (730) vorgesehen sind;
wobei der zweite Verbindungsabschnitt (720) und jeder der beiden zweiten gebogenen Abschnitte (740) die zweite Aufnahmekammer (800) bilden; eine zweite Öffnung (810) zwischen dem zweiten gebogenen Abschnitt (740) und dem zweiten Verbindungsabschnitt (720) ausgebildet ist, wobei die zweite Öffnung (810) mit der zweiten Aufnahmekammer (800) in Verbindung steht und die zweite Öffnung (810) so ausgebildet ist, dass Schaumkleber in die zweite Aufnahmekammer (800) eintreten kann.

11. Batteriepackgehäuse nach Anspruch 10, wobei der Innenbalken (700) mit einer Vielzahl von Entlüftungslöchern (600) versehen ist, und die Vielzahl von Entlüftungslöchern an dem Innenbalken so vorgesehen ist, dass sie der zweiten Öffnung (810) in vertikaler Richtung entsprechen.

12. Batteriepackgehäuse nach einem der Ansprüche 5 bis 7, wobei die strukturelle Verstärkung (40) mit einer Vielzahl von Entlüftungslöchern (600) versehen ist, die Vielzahl von Entlüftungslöchern (600) mit der Aufnahmekammer (41) in Verbindung stehen und die Vielzahl von Entlüftungslöchern (600) sowie ein Einlass für Schaumkleber in der strukturellen Verstärkung (40) jeweils an zwei gegenüberliegenden Seiten der strukturellen Verstärkung (40) vorgesehen sind.

13. Batteriepackgehäuse nach Anspruch 12, wobei die mehreren Entlüftungslöcher (600) und die erste Öffnung (510) jeweils an zwei gegenüberliegenden Seiten des inneren Seitenträgers (400) angeordnet sind.

14. Batteriepackgehäuse nach einem der Ansprüche 5 bis 13, wobei die Innenseite des Gehäuserahmens (100) ferner mit Verstärkungsplatten (112) versehen ist, die jeweils schräg an einer Seite eines entsprechenden der Seitenträger befestigt sind, der an die Innenseite des Gehäuserahmens (100) angrenzt, und die erste Öffnung (510) zwischen der Verstärkungsplatte (112) und einem entsprechenden der inneren Seitenträger (400) ausgebildet ist.

15. Ein Batteriepack, das das Batteriepackgehäuse gemäß einem der Ansprüche 1 bis 14 umfasst.

## Revendications

1. Boîtier de batterie comprenant un châssis de boîtier (100), dans lequel le châssis de boîtier (100) comprend une pluralité de longerons reliés les uns aux autres ; l'intérieur de chacun des longerons est muni d'un renfort structurel (40) relié à l'intérieur du longeron, le renfort structurel (40) étant muni d'une chambre de logement (41) communiquant avec l'espace intérieur du châssis de boîtier (100) qui est délimité par les longerons, **caractérisée en ce que** la chambre de logement (41) s'étend dans la direction d'extension du renfort structurel (40), le renfort structurel (40) est divisé en une pluralité de sections dans la direction d'extension du renfort structurel (40), une encoche est formée entre deux sections adjacentes quelconques de la pluralité de sections, la chambre de logement (41) est configurée pour être remplie d'au moins une partie de colle moussante, et ladite au moins une partie de colle moussante est confinée par la chambre de logement (41).

2. Boîtier de batterie selon la revendication 1, dans lequel le renfort structurel (40) comprend une pluralité de longerons intérieurs (400), et chacun de la pluralité de longerons intérieurs (400) est disposé de manière fixe sur l'un correspondant de la pluralité de longerons.

3. Boîtier de batterie selon la revendication 2, dans lequel chacun des longerons intérieurs (400) est divisé en une pluralité de sections le long d'une direction longitudinale du longeron correspondant parmi la pluralité de longerons, et deux sections adjacentes parmi la pluralité de sections sont pourvues d'une encoche.

4. Boîtier de batterie selon la revendication 2, dans lequel la chambre de logement (41) comprend des premières chambres de logement (500) prévues chacune dans l'un correspondant des longerons intérieurs (400), la première chambre de logement (500) s'étendant le long du longeron intérieur (400) et communiquant avec l'espace intérieur du châssis du boîtier (100).

5. Boîtier de batterie selon la revendication 4, dans lequel le longeron intérieur (400) comprend :
une première partie de raccordement (410) configurée pour raccorder l'un des longerons correspondants ; et
une première partie pliée (420) raccordée à un côté de la première partie de raccordement (410) qui est éloigné du longeron correspondant ;
dans laquelle la première partie pliée (420) et le longeron correspondant définissent ensemble la première chambre de logement (500), une première ouverture (510) est formée entre la première partie pliée (420) et le longeron correspondant, la première ouverture (510) communique avec la première chambre de logement (500), et la première ouverture (510) est configurée pour permettre à la colle moussante de pénétrer dans la première chambre de logement (500).

6. Boîtier de batterie selon la revendication 5, dans lequel la première partie pliée (420) comprend une première section de raccordement de transition (421) et une deuxième section de raccordement de transition (422), la première partie de raccordement (410) est reliée à la première section de raccordement de transition (421) selon un angle, la première section de raccordement de transition (421) est reliée à la deuxième section de raccordement de transition (422) selon un angle, et la deuxième section de raccordement de transition (422) est pourvue d'une rainure de réception de colle (423).

7. Boîtier de batterie selon la revendication 6, dans lequel la deuxième section de raccordement de transition (422) est pliée et formée sur un côté de la première section de raccordement de transition (421) qui est éloigné de la première partie de raccordement (410), et pliée vers un côté où se trouve un premier longeron (110) relié à la première partie de raccordement (410).

8. Boîtier de batterie selon la revendication 1, dans lequel le renfort structurel (40) comprend en outre une poutre intérieure (700) prévue à l'intérieur du châssis du boîtier (100), les deux extrémités de la poutre intérieure (700) étant chacune reliées à l'un des longerons correspondants.

9. Boîtier de batterie selon la revendication 8, dans lequel la chambre de logement (41) comprend en outre une deuxième chambre de logement (800) prévue dans la poutre intérieure (700), et la deuxième chambre de logement (800) s'étend le long de la poutre intérieure (700) et communique avec l'espace à l'intérieur du châssis du boîtier (100).

10. Boîtier de batterie selon la revendication 9, dans lequel la poutre intérieure (700) comprend :
une partie de connexion principale (710) dont les deux extrémités sont chacune reliées à l'un des longerons correspondants ;
une deuxième partie de connexion (720) fixée sur la partie de connexion principale (710) et s'étendant le long de celle-ci ;
une troisième partie de connexion (730) fixée perpendiculairement à un côté de la deuxième partie de connexion (720) qui est éloigné de la partie de connexion principale (710), et s'étendant le long de la partie de connexion principale (710) ; et
deux deuxièmes parties pliées (740) prévues respectivement sur deux côtés opposés de la troisième partie de connexion (730) ;
dans lequel la deuxième partie de raccordement (720) et chacune des deux deuxièmes parties pliées (740) définissent la deuxième chambre de logement (800) ; une deuxième ouverture (810) est formée entre la deuxième partie pliée (740) et la deuxième partie de raccordement (720), la deuxième ouverture (810) communique avec la deuxième chambre de logement (800), et la deuxième ouverture (810) est configurée pour permettre à de la colle moussante de pénétrer dans la deuxième chambre de logement (800).

11. Boîtier de batterie selon la revendication 10, dans lequel la poutre intérieure (700) est pourvue d'une pluralité de trous d'évacuation (600), et la pluralité de trous d'évacuation est prévue sur la poutre intérieure de manière à correspondre à la deuxième ouverture (810) en direction verticale.

12. Boîtier de batterie selon l'une quelconque des revendications 5 à 7, dans lequel le renfort structurel (40) est muni d'une pluralité de trous d'évacuation (600), la pluralité de trous d'évacuation (600) communique avec la chambre de logement (41), et la pluralité de trous d'évacuation (600) ainsi qu'une entrée de colle moussante dans le renfort structurel (40) sont prévues respectivement sur deux côtés opposés du renfort structurel (40).

13. Boîtier de batterie selon la revendication 12, dans lequel la pluralité de trous d'évacuation (600) et la première ouverture (510) sont disposées respectivement sur deux côtés opposés du longeron intérieur (400).

14. Boîtier de batterie selon l'une quelconque des revendications 5 à 13, dans lequel l'intérieur du châssis de boîtier (100) est en outre muni de plaques de renfort (112) fixées chacune obliquement sur un côté d'un longeron correspondant qui est adjacent à l'intérieur du châssis de boîtier (100), et la première ouverture (510) est formée entre la plaque de renfort (112) et l'un des longerons intérieurs (400) correspondants.

15. Bloc-batterie comprenant le boîtier de batterie selon l'une quelconque des revendications 1 à 14.
